# EUROPÄISCHE PATENTSCHRIFT

(11) **EP 1 004 788 B1**
(45) Veröffentlichungstag und Bekanntmachung des Hinweises auf die Patenterteilung: **07.06.2006**
(21) Anmeldenummer: 99121378.6
(22) Anmeldetag: 27.10.1999
(51) Int. Cl.: F16D 65/12, F16D 55/28, F16D 59/02, F16D 3/06

(54) **Federung für eine Zahnkupplung**
Spring for a toothed coupling
Ressort pour accouplement denté

(30) Priorität: 28.11.1998 DE 19855025
(43) Veröffentlichungstag der Anmeldung: 31.05.2000
(73) Patentinhaber: Sew-Eurodrive GmbH & Co. KG, 76646 Bruchsal (DE)
(72) Erfinder: Fischer, Horst, 76698 Ubstadt (DE)

(56) Entgegenhaltungen:
- GB-A- 1 140 944
- US-A- 3 157 057
- US-A- 5 437 351

## Beschreibung

Die Erfindung betrifft eine Federung für eine Zahnkupplung.

Bei Elektromotoren werden oft elektromagnetisch betätigbare Bremsen eingesetzt. Diese Bremsen umfassen einen Belagträger mit Bremsbelag, wobei der Belagträger von der Rotorachse angetrieben wird. Zur Drehmomentübertragung wird oft eine Mitnehmerverzahnung ausgebildet. Ein Beispiel für eine solche Bremse, eine Zweikreis-Sicherheitsbremse findet sich im Katalog P.892. 01. D der Firma Mayr aus Mauerstetten. Ein ähnliches Beispiel findet sich im Band 4 (Ausgabe 03/96) der Veröffentlichungsreihe 'Praxis der Antriebstechnik' der Firma SEW aus Bruchsal.

Der Belagträger des Bremsbelages besitzt dabei eine Innenverzahnung, der Mitnehmer eine Außenverzahnung. Diese beiden Verzahnungen stellen im wesentlichen eine Zahnkupplung dar.

Die Verzahnungen werden dabei derart ausgelegt, daß ein Ineinanderfügen durch einfaches Stecken ausführbar ist. Dazu ist ein anfangs wenigstens kleines Spiel nötig. Während des Betriebes werden die Verzahnungen immer mehr verschlissen. Daher vergrößert sich das Spiel der Zahnkupplung zunehmend mit der Standzeit.

Ein wichtiger nachteiliger Effekt ist dabei, daß bei Änderung der Richtung des Drehmomentflusses vom Mitnehmer zum Belagträger, also einem Wechsel der anliegenden Zahnflanken, ein Geräusch entsteht. Dieses Geräusch kann störende Größenordnungen erreichen. Die zugehörige Drehmoment-Winkel-Kennlinie ist über einen gewissen Winkelbereich hinweg Null, also drehmomentfrei. Diese Eigenschaft der spielfreien Zahnkupplung muß zur Reduzierung des Geräusches bzw zur Vermeidung geändert werden. Dazu sind folgende Vorgehensweisen bekannt

Aus dem oben erwähnten Katalog der Firma Mayr ist ein O-Ring aus einem Elastomer wie Gummi bekannt, wobei dieses Elastomer zwischen die Verzahnungen in eine dafür vorgesehene Nut eingebracht wird. Das Elastomer verhindert ein freies Spiel der Verzahnungen gegeneinander, da bei relativen Verdrehungen eine vorwiegend elastische Federkraft auftritt.

Da die Federkraft von Gummi jedoch sehr klein ist, ist die lärmmindernde Wirkung nicht ausreichend. Außerdem treten bei Scheibenbremsen hohe Temperaturen auf Daher kann Gummi in solchen Fällen seine Elastizität völlig verlieren.

Aus der Gebrauchsmusteranmeldung G 78 25 113.5 ist eine Ringfeder bekannt, die die Drehmoment-Winkel-Kennlinie in ähnlicher Weise modifiziert und daher auch eine ähnliche Wirkung hat, insbesondere eine lärmmindernde Wirkung. Die Fertigung der dort beschriebenen Führungsnut ist aufwendig und kostspielig.

Aus der Gattungsbildenden US 3167057 ist eine Feder bekannt, die in den Bereich der Verzahnungen einer Reibungskupplung eingebracht ist und an den Stirnseiten eingeklemmt ist.

Aus der US 5 437 351 ist eine Reibungsbremse bei einem Elektromotor bekannt, wobei Bügelfedern vorgesehen sind, wobei die Fixierung gering ist und daher die Fertigung der Bremse aufwendig.

Der Erfindung liegt die Aufgabe zugrunde, eine Federung für eine Zahnkupplung mit verbesserter Fixierung weiterzubilden, wobei eine einfache kostengünstige Fertigung ermöglicht werden soll.

Erfindungsgemäß wird die Aufgabe gelöst nach den in Anspruch 1 angegebenen Merkmalen.

Insbesondere kann die Federung aus einer oder mehreren Untereinheiten, den federnden Bauteilen, bestehen. Des weiteren weist jedes federnde Bauteil mindestens eine Bügelfeder auf. Die Auslegung der Verzahnungen sind derart ausgelegt, daß die federnden Bauteile einbringbar sind. Außerdem klammert sich das federnde Bauteil mit seinen Bügelfedern an der linken und rechten Flanke eines Zahnes fest in Weiterbildung können aber auch Flanken verschiedener benachbarter oder voneinander beabstandeter Zähne verwendet werden. Von Vorteil ist dabei, daß keine Bauteile nachgearbeitet werden müssen und die Bügelfedern eine Federkraft aufweisen. Weiter ist die verbesserte Fixierung in tangentialer bzw. Drehrichtung von Vorteil.

In einer Weiterbildung wird die Bügelfeder in die Lücke der Außenverzahnung eingebracht. Von Vorteil ist dabei, daß die Verzahnungen in einfacher Weise modifiziert werden, indem der Lückengrund oder Fußkreis der Außenverzahnung tiefer gelegt wird oder die Zahnhöhe der Innenverzahnung zurückgenommen wird.

In einer Weiterbildung berührt die Bügelfeder den jeweiligen Zahnkopf der Innenverzahnung. Von Vorteil ist dabei, daß eine Kraft auf den Zahnkopf ausübbar ist.

Alternativ ist in einer anderen Ausführungsform die Bügelfeder in eine Lücke der Innenverzahnung einbringbar mit den zugehörigen Weiterbildungen. Die Vorteile hierbei entsprechen den vorgenannten Vorteilen.

In einer Weiterbildung ist die Federung, umfassend federnde Bauteile, aus Federdraht gefertigt. Von Vorteil ist dabei die einfache Handhabung und kostengünstige Fertigung. Außerdem ist auch ein Einsatz und Betrieb bei hohen Temperaturen möglich.

In einer Weiterbildung ist der Federdraht ein vergüteter Stahldraht, beispielsweise gemäß DIN 17 224 oder DIN 17 223. Von Vorteil ist dabei die gute Verfügbarkeit auf dem Markt und die kostengünstige Beschaffung.

In einer Weiterbildung ist der Federdraht ein patentiert-gezogener Federdraht, beispielsweise gemäß DIN 17 223. Von Vorteil ist dabei die gute Verfügbarkeit auf dem Markt und die kostengünstige Beschaffung.

In einer Weiterbildung ist die Federung aus Gummi. Von Vorteil ist dabei die kostengünstige Herstellung.

In einer weiteren Ausführungsform ist das federnde Bauteil derart geformt, daß Kräfte zur Selbstfixierung ausgebildet werden. Das federnde Bauteil klammert sich an der Verzahnung fest. Es fixiert sich dadurch selbst. Bei der Fertigung sind daher keine zusätzlichen Haltevorrichtungen oder dergleichen notwendig. Die dabei auftretenden Kräfte sind nicht groß, da sie nur der Fixierung dienen sollen. Die Kräfte werden von Verbindungs- oder Anschlußstücken zwischen oder an die Bügelfedern erzeugt.

In einer Weiterbildung klammert sich das federnde Bauteil an vorderer und hinterer Stirnseite der Verzahnung fest. Von Vorteil ist dabei die Fixierung in Rotorachsenrichtung

In einer Weiterbildung sind die Verzahnungen als Evolventenverzahnungen mit oder ohne Korrekturen ausgeführt. Von Vorteil ist dabei, daß Verzahnungsmaschinen zur Fertigung von Evolventenverzahnungen handelsüblich sind. Diese Maschinen fertigen schnell und kostengünstig die Verzahnungen..

Die weiteren Ausführungsformen und Vorteile ergeben sich aus den Unteransprüchen.

### Bezugszeichenliste

- 1: Bremsscheibe
- 2: Mitnehmer
- 3: Verzahnungsbereich der Zahnkupplung
- 4: Zahnkopf der Innenverzahnung
- 5: Zahnfuß der Außenverzahnung
- 6: federndes Bauteil, Spange
- 7: Ankerscheibe
- 8: Elektromagnet
- 9: Federn
- 21: Schenkel
- 22: Verbindung
- 23: Krallen

Die Erfindung wird anhand von Abbildungen näher erläutert.

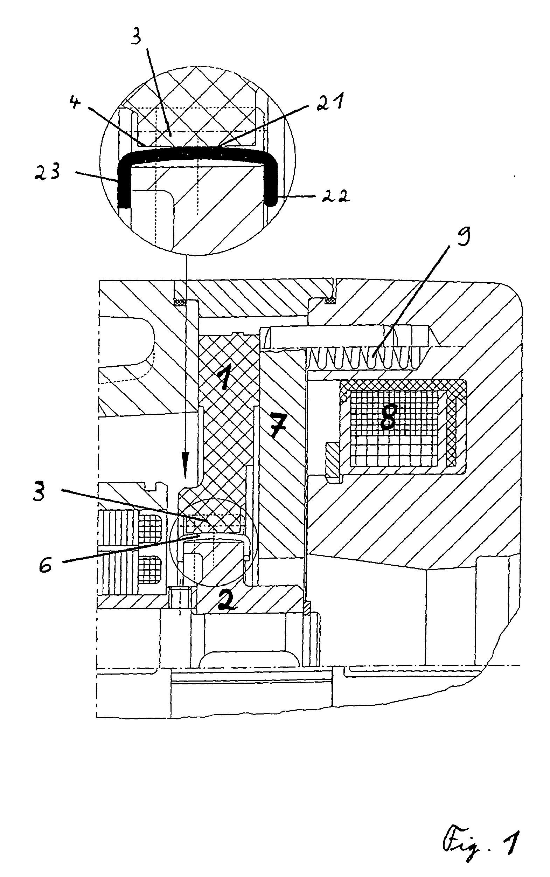

In der Figur 1 ist eine elektromagnetisch betätigbare Bremse für einen Elektromotor gezeigt. Bei Bestromung des Elektromagneten 8 wird die Ankerscheibe 7 gegen die Kraft der Federn 9 angezogen. Nach Abschalten des Stromes wird die Ankerscheibe 7 von den Federn 9 gegen den Bremsbelag der Bremsscheibe 1 gedrückt und somit die Bremskraft erzeugt. Die Bremsscheibe 1 wirkt beidseitig und wird daher verschiebbar auf dem Mitnehmer 2 angebracht. Somit stellt sich beim Bremsen eine gleichmäßige Wirkung der beiden Bremsflächen ein. Außerdem kann sich die Bremsscheibe 1 von den zugehörigen feststehenden Bremsflächen bei Bestromung des Elektromagneten 8 lösen und freistellen.

Die Verbindung und Drehmomentübertragung von Bremsscheibe 1 mit Mitnehmer 2 erfolgt durch den Verzahnungsbereich der Zahnkupplung 3. Die Verzahnungen 3 sind als mathematisch zueinander passende Evolventenverzahnungen ausgeführt. Dabei werden die Zahnweiten so mit einem Aufmaß bzw. einem Abmaß beaufschlagt, daß ein gewisses Flankenspiel vorhanden ist. Daher können die Verzahnungen des Mitnehmers 2 und der Bremsscheibe 1 ohne großen Kraftaufwand ineinander gefügt werden.

Beim Betrieb der Bremse entstehen Rasselgeräusche, da der Drehmomentenfluß vom Mitnehmer 2 zur Bremsscheibe 1 sich umkehren kann. Diese Umkehrung des Drehmomentenflusses kann beim Ein- und Ausschalten der Bremse ebenso auftreten wie auch beim Betrieb des Elektromotors infolge von lastseitig oder antriebsseitig auf den Rotor aufgebrachten Drehmomentenschwankungen. Diese Drehmomentenschwankungen entsprechen den Schwankungen des Energieflusses in den 'Speicher für Rotationsenergie' Bremsscheibe 1.

Durch das Einbringen der erfindungsgemäßen Federung werden diese Rasselgeräusche unterbunden. Dazu ist eine Verkürzung des Zahnkopfes, also der Vergrößerung des Kopfkreises, der Innenverzahnung 4 bzw. eine Tieferlegung des Lückengrundes, also der Verkleinerung des Fußkreises, der Außenverzahnung 5 notwendig. Somit wird Platz geschaffen für das Einbringen der erfindungsgemäßen Federung.

Bei entsprechenden erfindungsgemäßen Ausführungsbeispielen mit anderen Verzahnungen kann auch schon bei einer standardmäßigen Auslegung gemäß DIN in manchen Fällen genügend viel Platz für das Einbringen der Federung vorhanden sein, so daß auf die Verkürzung des Zahnkopfes verzichtet werden kann.

Die Federung besteht aus federnden Bauteilen, die man auch als Klammern oder Spangen, bezeichnen kann. Es können mehrere solche Spangen an verschiedenen Stellen eingebracht werden. In der Figur 1 ist nur eine einzige solche Spange 6 eingezeichnet.

Die Spangen 6 sind derart geformt, daß sie auf den Mitnehmer 2 aufgeklipst oder aufgesteckt werden können. Sie sitzen dann während der weiteren Montage genügend fest, haben also eine genügende Selbstfixierung.

Die Spangen 6 bestehen aus Federdraht. Es sind verschiedene Federdrähte, wie beispielsweise patentiert-gezogener oder vergüteter Federstahldraht nach DIN 17 223 oder DIN 17 224 verwendbar.

Die Spange 6 besitzt in der gezeichneten Form der Figur 1 zwei Bügelfedern oder Schenkel 21, von denen jeder im Lückengrund der Außenverzahnung 5 liegt und derart ausgebildet ist, daß er eine Krümmung besitzt. Die Bügelfedern oder Schenkel 21 berühren jeweils den Zahnkopf der Innenverzahnung 4 Nach Einbringen der Spangen 6 üben die Bügelfedern oder Schenkel 21 eine Federkraft auf den Zahnkopf der Innenverzahnung 4 aus Diese Kraft bewirkt, daß die seitlich positionierten Flanken der Verzahnungen 3 aufeinander zugeschoben werden und satt anliegen. Beim Einbringen von nur einer Spange sind die satt anliegenden Flanken um etwa einen Viertelkreis zur Spange versetzt

Dadurch ist ein freies Spiel der Flanken verhindert. Nur bei großem Kraftaufwand sind noch winzige Verdrehungen möglich. Die Drehmoment-Winkel-Kennlinie ist entsprechend geändert. Das Rasselgeräusch ist somit unterbunden.

In weiteren erfindungsgemäßen Ausführungsbeispielen werden eine oder mehrere Spangen mit nur einem Schenkel verwendet. In anderen erfindungsgemäßen Ausführungsbeispielen werden eine oder mehrere Spangen mit mehreren Schenkeln verwendet.

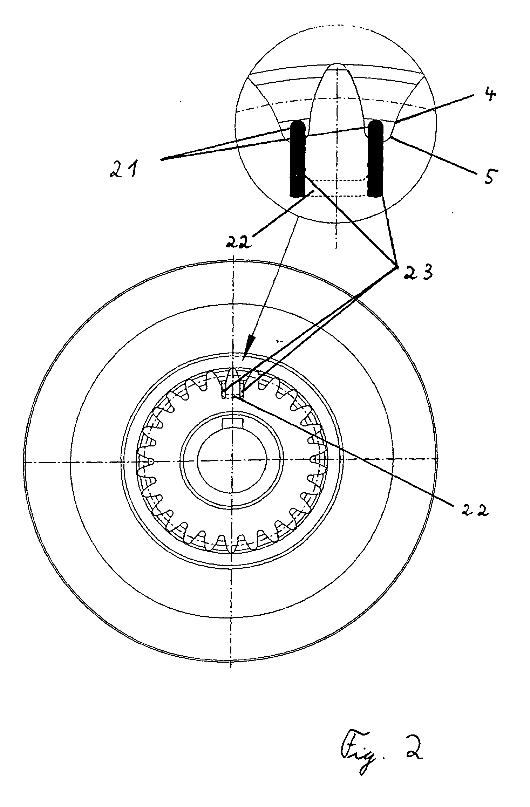

In der Figur 2 ist eine Ansicht des Mitnehmers aus der Richtung der Rotorachse gezeigt. Die Spange 6 liegt im Lückengrund, also dem Zahnfuß der Außenverzahnung 5. Die Bügelfedern oder Schenkel 21 berühren den Zahnkopf der Innenverzahnung 4. Die Krallen 23 krallen sich in die vordere Stirnseite des Mitnnehmers 2 mit Verzahnung 3 ein. Die Verbindung 22 liegt an der hinteren Stirnseite des Mitnehmers 2 mit Verzahnung auf.

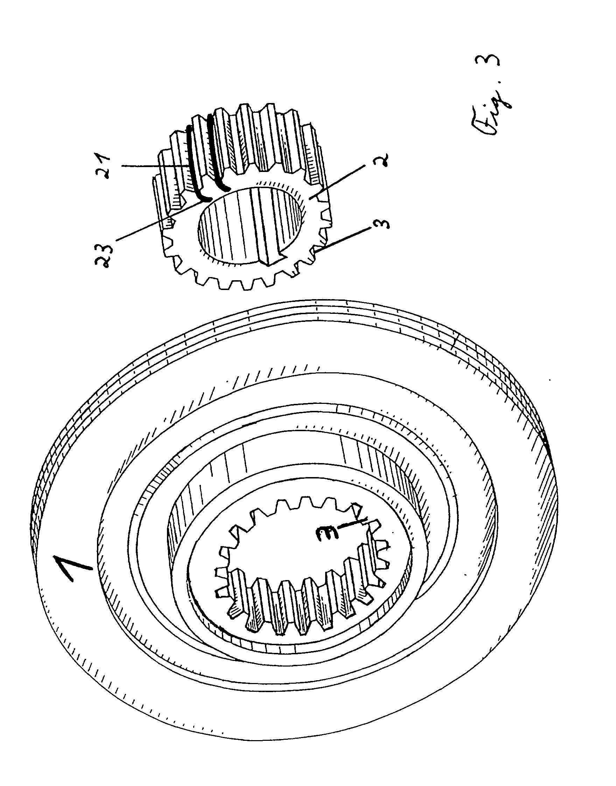

In der Figur 3 ist eine dreidimensionale Ansicht des Mitnehmers 2 mit Verzahnungsbereich 3 und der Bremsscheibe 1 mit Innenverzahnung im Verzahnungsbereich 3 gezeigt. Die Spange 6 ist auf einen Zahn aufgeklipst. Die Bügelfeder 6 oder Schenkel 21 liegen im Lückengrund 5. Die Krallen 23 krallen sich an der vorderen Stirnseite des Mitnehmers 2 fest.

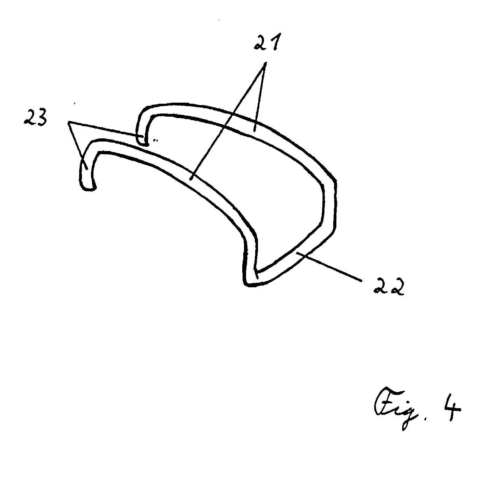

In der Figur 4 ist ein erfindungsgemäßes federndes Bauteil der Federung gezeigt. Dieses Bauteil kann auch als Spange bezeichnet werden. Die Spange besitzt zwei Schenkel 21. Diese weisen eine flache Krümmung auf. Nach Einbringen in den Lückengrund oder Fußkreis der Außenverzahnung stützt der Schenkel sich am Lückengrund ab, insbesondere an seiner Kante zu den beiden Stirnseiten, und drückt mit seinem höchsten Punkt gegen den Zahnkopf der Innenverzahnung wie eine Stabfeder in radialer Richtung der Verzahnung.

Zur Selbstfixierung während des Einbaus dienen die sonstigen Krümmungen und dadurch auftretenden Federkräfte. Mit der Verbindung krallt sich das federnde Bauteil an der vorderen Stirnseite der Verzahnung fest. Mit den Krallen 23 krallt sich das federnde Bauteil an der hinteren Stirnseite fest. In der in Figur 4 gezeigten Ausführung ist das Verbindungsstück 22 derart geformt, daß die Schenkel 21 nicht parallel sind. Daher klammert sich die Spange, das federnde Bauteil, an einem Zahn fest, d.h. es drückt mit dem einen Schenkel 21 gegen die linke Zahnflanke und mit dem anderen Schenkel 21 gegen die rechte Zahnflanke.

Bei einer weiteren Ausführungsform wird das Verbindungsstück länger ausgelegt. Daher kann sich die Spange an der rechten Zahnflanke eines Zahnes und an der linken Zahnflanke eines anderen Zahnes festklammern. Erfindungsgemäß sind auch Ausführungsbeispiele, bei denen die Spange in den Lückengrund der Innenverzahnung eingebracht wird. Erfindungsgemäß sind auch Ausführungsbeispiele, bei denen die Spange aus Plastik oder Gummi gefertigt wird.

## Patentansprüche

1. Federung für eine Zahnkupplung, insbesondere bei einer elektromagnetisch betätigbaren Bremse für einen Elektromotor,
wobei die Zahnkupplung ein innenverzahntes äußeres Teil (1) und ein außenverzahntes inneres Teil (2) umfaßt,
und wobei die beiden Teile in axialer Richtung gegeneinander verschiebbar sind,
wobei die Federung mindestens ein federndes Bauteil (6) umfaßt,
wobei jedes federnde Bauteil mindestens eine Bügelfeder aufweist und
wobei die Bügelfedern derart dimensioniert und ausgelegt sind, daß die Bügelfeder jeweils zwischen die Verzahnungen einbringbarist,
**dadurch gekennzeichnet, dass**
das federnde Bauteil mit mindestens zwei Bügelfedern jeweils derart geformt ist, daß wenigstens Federkräfte zur Selbstfixierung zwischen linker Zahnflanke eines Zahns und rechter Zahnflanke desselben oder eines anderen Zahns auftreten.

2. Federung nach Anspruch 1
**dadurch gekennzeichnet, daß**
die Bügelfeder jeweils in eine Lücke der Innen- oder Außenverzahnung einbringbar ist.

3. Federung nach Anspruch 2
**dadurch gekennzeichnet, daß**
jeweils die Bügelfeder nach Einbringen den jeweiligen Zahnkopf der Innen- oder Außenverzahnung berührt..

4. Federung nach einem der Ansprüche 1 bis 3
**dadurch gekennzeichnet, daß**
die Bügelfeder derart ausgebildet ist, daß sie eine Federkraft zwischen Zahnkopf der Innen- oder Außenverzahnung und Lückengrund oder Fußkreis der entsprechenden Gegenverzahnung, also Außenverzahnung bei Innenverzahnung oder Innenverzahnung bei Außenverzahnung, ausübt.

5. Federung nach einem der vorangegangenen Ansprüche
**dadurch gekennzeichnet, daß**
die federnden Bauteile aus Federdraht, vergütetem Stahldraht, patentiert-gezogenem Stahldraht, oder aus Elastomer, also Gummi, Plastik, Kunststoff oder dergleichen, bestehen.

6. Federung nach einem der vorangegangenen Ansprüche
**dadurch gekennzeichnet, daß**
das federnde Bauteil jeweils derart geformt ist, daß es mindestens einen Schenkel (21) aufweist, der derart gebogen ist, daß er nach Einbringen in die Verzahnung eine Federkraft in im wesentlichen radialer Richtung der Verzahnung ausbildet.

7. Federung nach einem der vorangegangenen Ansprüche
**dadurch gekennzeichnet, daß**
das federnde Bauteil jeweils derart geformt ist, daß beim und nach dem Einbringen in die Verzahnung Federkräfte zur Selbstfixierung ausgebildet werden.

8. Federung nach einem der vorangegangenen Ansprüche
**dadurch gekennzeichnet, daß**
das federnde Bauteil jeweils derart geformt ist, daß Federkräfte zur Selbstfixierung, insbesondere wie bei einer Klammer, zwischen vorderer und hinterer Stirnseite der Verzahnung austreten.

## Claims

1. A spring system for a toothed coupling, particularly in relation to an electromagnetically operable brake for an electric motor,
the tooth coupling comprising an internally toothed external part (1) and an externally toothed internal part (2),
and the two parts being displaceable relative to one another in the axial direction,
the spring system comprising at least one resilient component (6),
each resilient component having at least one clip spring, and
the clip springs being dimensioned and designed in such a way that the clip spring may in each case be inserted between the toothings,
**characterised in that**
the resilient component comprising at least two clip springs is in each case shaped in such a way that at least spring forces occur for self-fixing between the left tooth profile of a tooth and the right tooth profile of the same or of another tooth.

2. A spring system according to Claim 1,
**characterised in that**
the clip spring may in each case be inserted into a space of the internal or external toothing.

3. A spring system according to Claim 2,
**characterised in that**
the clip spring, after insertion, is in each case in contact with the corresponding tooth tip of the internal or external toothing.

4. A spring system according to one of Claims 1 to 3,
**characterised in that**
the clip spring is designed in such a way that it exerts a spring force between the tooth tip of the internal or external toothing and the space bottom or root circle of the corresponding counter-toothing, thus the external toothing in the case of the internal toothing, or the internal toothing in the case of the external toothing.

5. A spring system according to one of the preceding Claims,
**characterised in that**
the resilient components are made of spring wire, heat-treated steel wire, patented-and-drawn steel wire, or of elastomer, thus rubber, plastics material, synthetic material or the like.

6. A spring system according to one of the preceding Claims,
**characterised in that**
the resilient component is in each case shaped in such a way that it has at least one leg (21) which is curved in such a way that after insertion into the toothing it forms a spring force in the substantially radial direction of the toothing.

7. A spring system according to one of the preceding Claims,
**characterised in that**
the resilient component is in each case shaped in such a way that during and after the insertion into the toothing spring forces are formed for self-fixing.

8. A spring system according to one of the preceding Claims,
**characterised in that**
the resilient component is in each case shaped in such a way that spring forces for self-fixing, particularly as with a clip, occur between the front and rear face of the toothing.

## Revendications

1. Ressort pour un accouplement denté, en particulier dans le cas d'un frein à commande électromagnétique pour un moteur électrique, dans lequel l'accouplement denté comprend une partie extérieure à denture intérieure (1) et une partie intérieure à denture extérieure (2), et les deux parties peuvent être déplacées l'une par rapport à l'autre dans la direction axiale, le ressort comprend au moins un élément de construction élastique (6), chaque élément de construction élastique présente au moins un ressort en étrier et les ressorts en étrier étant dimensionnés et conçus de manière à ce que le ressort en étrier puisse chaque fois être inséré entre les dentures, **caractérisé en ce que** l'élément de construction élastique est formé par au moins deux ressorts en étrier de telle manière qu'au moins des forces élastiques d'autofixation sont engendrées entre le flanc de dent gauche d'une dent et le flanc de dent droit de la même dent ou d'une autre dent.

2. Ressort selon la revendication 1, **caractérisé en ce que** le ressort en étrier peut être inséré dans un creux de la denture intérieure ou extérieure.

3. Ressort selon la revendication 2, **caractérisé en ce que** le ressort en étrier, après son montage, touche la tête de dent de la denture intérieure ou extérieure.

4. Ressort selon l'une des revendications 1 à 3, **caractérisé en ce que** le ressort en étrier est conçu de manière à exercer une force élastique entre la tête de dent de la denture intérieure ou de la denture extérieure et le fond du creux ou le cercle de pied de la contre-denture correspondante, donc de la denture extérieure dans le cas de la denture intérieure ou de la denture intérieure dans le cas de la denture extérieure.

5. Ressort selon l'une quelconque des revendications précédentes, **caractérisé en ce que** les éléments de construction élastiques sont réalisées dans un fil métallique pour ressorts, en fil d'acier traité par trempe et revenu, en fil d'acier breveté ou en élastomère donc en caoutchouc, en plastique, en matière synthétique ou similaire.

6. Ressort selon l'une quelconque des revendications précédentes, **caractérisé en ce que** l'élément de construction élastique est formé de telle manière qu'il présente au moins une branche (21) qui est courbée de telle manière qu'il produit, après insertion dans la denture, une force élastique dans la direction essentiellement radiale de la denture.

7. Ressort selon l'une quelconque des revendications précédentes, **caractérisé en ce que** l'élément de construction élastique est formé de telle manière que des forces élastiques d'autofixation sont produites lors du montage et après le montage dans la denture.

8. Ressort selon l'une quelconque des revendications précédentes, **caractérisé en ce que** l'élément de construction élastique est formé de telle manière que des forces élastiques d'autofixation, en particulier comme dans le cas d'une pince, se produisent entre face frontale avant et face frontale arrière de la denture.
